# EUROPÄISCHE PATENTANMELDUNG

(11) **EP 3 106 698 A1**
(43) Veröffentlichungstag der Anmeldung: **21.12.2016**
(21) Anmeldenummer: 15172504.1
(22) Anmeldetag: 17.06.2015
(51) Int. Cl.: F16D 41/10, F16D 43/02

(54) **MECHANISCHES GETRIEBE MIT INTEGRIERTER LASTMOMENTSPERRE**

(71) Anmelder: Phoenix Mecano Komponenten AG, 8260 Stein am Rhein (CH)
(72) Erfinder: FLUCK, Timo, 78187 Geisingen (DE); SAVIC, Rade, 4415 Lausen (CH)
(74) Vertreter: Dr. Graf & Partner AG

(57) **Zusammenfassung**

Das mechanische Getriebe (1) mit integrierter Lastmomentsperre, umfasst ein Eingangsglied (2), ein Ausgangsglied (3), ein Gehäuse (4) sowie die Lastmomentsperre (5), wobei das Eingangsglied (2) und das Ausgangsglied (3) um eine gemeinsame Drehachse (L) drehbar gelagert sind, wobei die Lastmomentsperre (5) derart wirkt, dass das Eingangsglied (2) eine Drehbewegung auf das Ausgangsglied (3) übertragen kann, und dass ein am Ausgangsglied (3) angreifendes Drehmoment keine Bewegung des Eingangsgliedes (2) zur Folge hat, da die Lastmomentsperre (5) das angreifende Drehmoment blockiert.

## Beschreibung

Die Erfindung betrifft ein mechanisches Getriebe mit integrierter Lastmomentsperre.

### Stand der Technik

Lastmomentsperren gehören zu den selbsttätig schaltenden Kupplungen und dienen beispielsweise in der Antriebstechnik dazu, ein Drehmoment in einer Kraftflussrichtung von einem Eingangsglied zu einem Ausgangsglied zu übertragen, und Drehmomente aus der Gegenrichtung zu blockieren.

Das Dokument WO2012008851A1 offenbart eine Lastmomentsperre für einen Ventilantrieb. Diese Lastmomentsperre verbindet zwei drehbare Wellen, ein Eingangsglied und ein Ausgangsglied, sodass Drehmomente, welche am Ausgangsglied angreifen nicht auf das Eingangsglied übertragen werden. Diese Lastmomentsperre weist die Nachteile auf, dass sie relativ viele Komponenten umfasst und störungsanfällig ist, dass sie eine relativ grosse Bauhöhe aufweist, und dass sie schlecht mit einem mechanischen Getriebe kombinierbar ist.

### Darstellung der Erfindung

Aufgabe der Erfindung ist es ein mechanisches Getriebe mit einer integrierten, kompakten und zuverlässig arbeitenden Lastmomentsperre zu bilden.

Diese Aufgabe wird gelöst mit einem mechanischen Getriebe mit integrierter Lastmomentsperre aufweisend die Merkmale von Anspruch 1. Die Unteransprüche 2 bis 15 betreffen weitere vorteilhafte Ausgestaltungen.

Die Aufgabe wird insbesondere gelöst mit einem mechanischen Getriebe mit integrierter Lastmomentsperre, umfassend ein Eingangsglied, ein Ausgangsglied, ein Gehäuse sowie die Lastmomentsperre, wobei das Eingangsglied und das Ausgangsglied um eine gemeinsame Drehachse drehbar gelagert sind, wobei die Drehachse eine Umfangsrichtung definiert, wobei das Gehäuse eine Gehäusewand umfasst, welche eine ringförmige, konzentrisch zur Drehachse verlaufende, und zur Drehachse hin ausgerichtete Führungsinnenfläche aufweist, wobei die Lastmomentsperre einen um die Drehachse drehbaren Bremsläufer umfasst, welcher Teil des Ausgangsgliedes bildet, wobei der Bremsläufer eine sich entlang eines Winkels in Umfangsrichtung erstreckende, bezüglich der Drehachse nach Aussen gerichtete Klemmfläche umfasst, wobei die Klemmfläche ausgehend von einem Mittenbereich beidseitig in Umfangsrichtung in einen Endbereich übergeht, und wobei der Bremsläufer derart im Gehäuse angeordnet ist, dass die Klemmfläche und die Führungsinnenfläche gegenüberliegen und dazwischen einen in Umfangsrichtung verlaufenden Klemmspalt ausbilden, wobei die Klemmfläche derart ausgestaltet ist, dass sich der Klemmspalt ausgehend vom Mittenbereich beidseitig entlang des Endbereichs verjüngt, wobei die Lastmomentsperre zumindest ein Paar von Klemmkörpern umfasst, welche im Klemmspalt in Umfangsrichtung beabstandet angeordnet sind, wobei zwischen den zwei Klemmkörpern eine Feder angeordnet ist, wobei die Klemmkörper derart ausgestaltet ist und insbesondere radial zur Drehachse eine derartige radiale Breite aufweisen, dass der Klemmkörper sich im Endbereich im Klemmspalt zwischen der Führungsinnenfläche und der Klemmfläche verklemmen kann, wobei der Bremsläufer zudem eine sich in Richtung der Drehachse erstreckende erste Anschlagfläche aufweist, und wobei das Eingangsglied eine zweite Anschlagfläche umfasst, welche in Umfangsrichtung gegenüberliegend der ersten Anschlagfläche angeordnet ist, sodass bei einem Drehen im Umfangsrichtung die erste und zweite Anschlagfläche aneinander anschlagen können, sodass das Eingangsglied den Bremsläufer in Umfangsrichtung antreiben kann, und wobei das Eingangsglied ein Löseteil umfasst, welches derart angeordnet ist, dass dieses stellungsabhängig eine in Umfangsrichtung wirkende Kraft auf den Klemmkörper ausüben kann, wobei die erste Anschlagfläche und die zweite Anschlagfläche derart in Umfangsrichtung beabstandet angeordnet sind, dass, wenn der Klemmkörper im Endbereich im Klemmspalt verklemmt ist, zuerst das Löseteil den Klemmkörper um einen Lösewinkel in Richtung zum Mittenbereich hin bewegt, bevor die erste Anschlagfläche des Bremsläufers auf die zweite Anschlagfläche des Eingangsgliedes einwirkt und diesen in Umfangsrichtung bewegt, um derart zuerst den Klemmkörper aus der Klemmstellung zu drücken, bevor der Bremsläufer und das damit verbunden Ausgangsglied in Umfangsrichtung um die Drehachse rotiert wird..

Das erfindungsgemässe mechanische Getriebe umfassend eine integrierte Lastmomentsperre weist eine sehr geringe Bauhöhe auf, erfordert wenig Platz, und kann daher sehr gut in bestehende Komponenten wie Motoren oder Antriebe integriert werden. Die Lastmomentsperre umfasst relativ wenige Teile, was einen geringen Verschleiss und eine langfristig hohe Betriebssicherheit zur Folge hat. Die Lastmomentsperre ist insbesondere auch für höhere Drehzahlen und/oder schnelle Lastwechsel und/oder zur Übertragung von grösseren Drehmomenten geeignet. Das erfindungsgemässe mechanische Getriebe umfassend die integrierte Lastmomentsperre ist daher auch sehr dynamisch betreibbar, falls erforderlich mit höherer Drehzahl, schnellen Lastwechseln, und auch grösseren übertragenen Drehmomenten. Das erfindungsgemässe mechanische Getriebe erlaubt somit trotz sehr kompaktem Aufbau einen zuverlässigen, dynamischen Betrieb.

In einer besonders vorteilhaften Ausgestaltung umfassen das Eingangsglied sowie das Ausgangsglied je ein Zahnrad, an welchen die einwirkenden Drehmomente ein- beziehungsweise ausgeleitet werden.

In einer besonders vorteilhaften Ausgestaltung weisen die Klemmkörper zwei Gleitflächen auf.

Das erfindungsgemässe mechanische Getriebe wird besonders vorteilhaft in Kombination mit einem Linearmotor verwendet, wobei der Linearmotor das Eingangsglied und dadurch das Ausgangsglied antreibt, wobei am Ausgangsglied angreifende Drehmomente durch das mechanische Getriebe blockiert werden und nicht auf den Linearmotor einwirken, sodass der Linearmotor vor zu grossen einwirkenden Drehmomenten geschützt ist. In einer vorteilhaften Ausgestaltung weisen das Eingangsglied und das Ausgangsglied denselben Durchmesser auf, sodass das mechanische Getriebe keine Übersetzung aufweist und nur als mechanische Sperre wirkt.

### Kurze Beschreibung der Zeichnungen

Die zur Erläuterung der Ausführungsbeispiele verwendeten Zeichnungen zeigen:
- Fig. 1: eine Explosionszeichnung eines ersten Ausführungsbeispiels eines mechanischen Getriebes mit integrierter Lastmomentsperre, wobei die Figuren 2 bis 11 weitere Details des ersten Ausführungsbeispiels zeigen;
- Fig. 2: ein Eingangsglied in perspektivische Ansicht;
- Fig. 3: eine Seitenansicht des mechanischen Getriebes;
- Fig. 4: eine Draufsicht auf das mechanische Getriebe;
- Fig. 5: einen Schnitt durch das mechanische Getriebe entlang der Schnittlinie B-B;
- Fig. 6: einen Schnitt durch das mechanische Getriebe entlang der Schnittlinie C-C;
- Fig. 7: einen Schnitt durch das mechanische Getriebe entlang der Schnittlinie A-A;
- Fig. 8: eine Detailansicht des Klemmspaltes mit darin angeordneten Klemmkörpern, ausgestaltet als Rollkörper;
- Fig. 9: bis 11 eine Draufsicht auf das mechanische Getriebe, teilweise im Schnitt, in unterschiedlichen Stellungen;
- Fig. 12: einen Schnitt durch ein zweites Ausführungsbeispiel eines mechanischen Getriebes;
- Fig. 13 bis 19: ein drittes Ausführungsbeispiel eines mechanischen Getriebes;

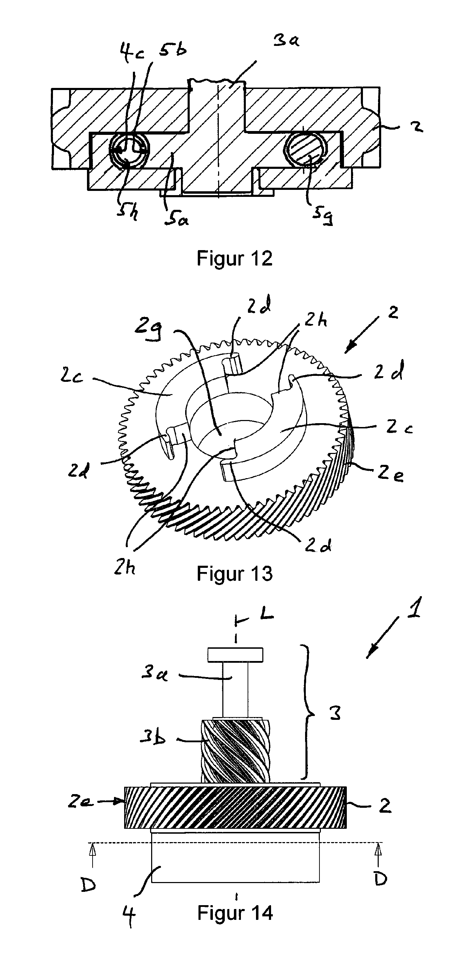

- Fig. 13: eine perspektivische Ansicht des Eingangsglieds;
- Fig. 14: eine Seitenansicht des mechanischen Getriebes;

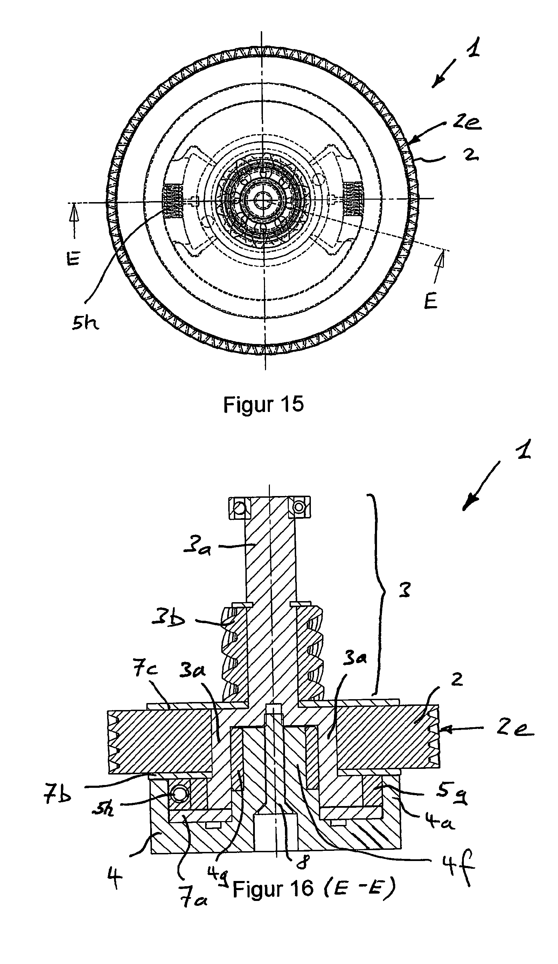

- Fig. 15: eine Draufsicht des mechanischen Getriebes;
- Fig. 16: einen Längsschnitt durch das mechanische Getriebe entlang der Schnittlinie E-E;

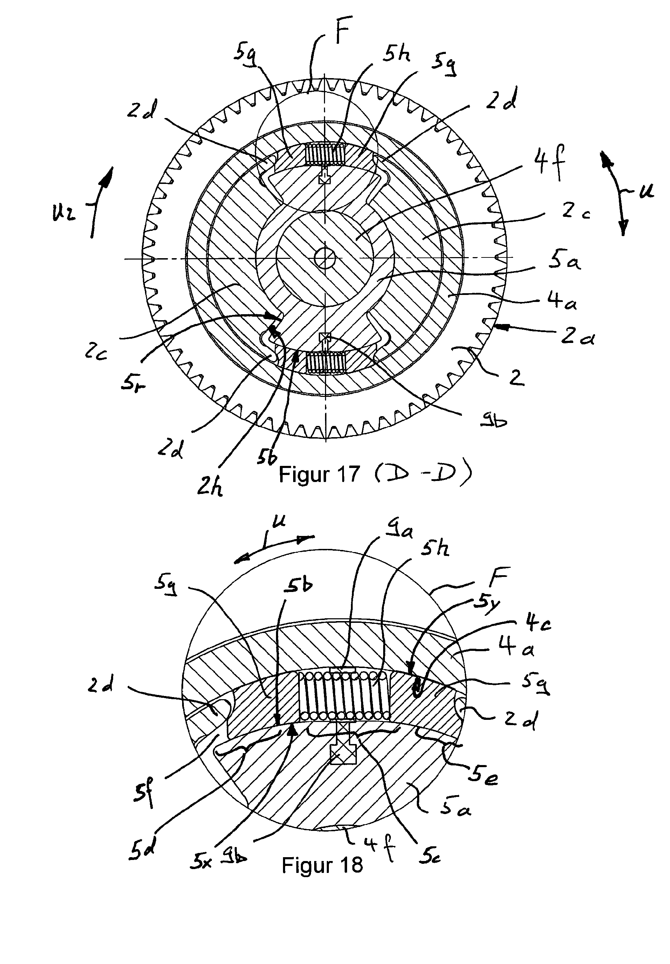

- Fig. 17: einen Schnitt durch das mechanische Getriebe entlang der Schnittlinie D-D;
- Fig. 18: eine Detailansicht des Bereichs F;

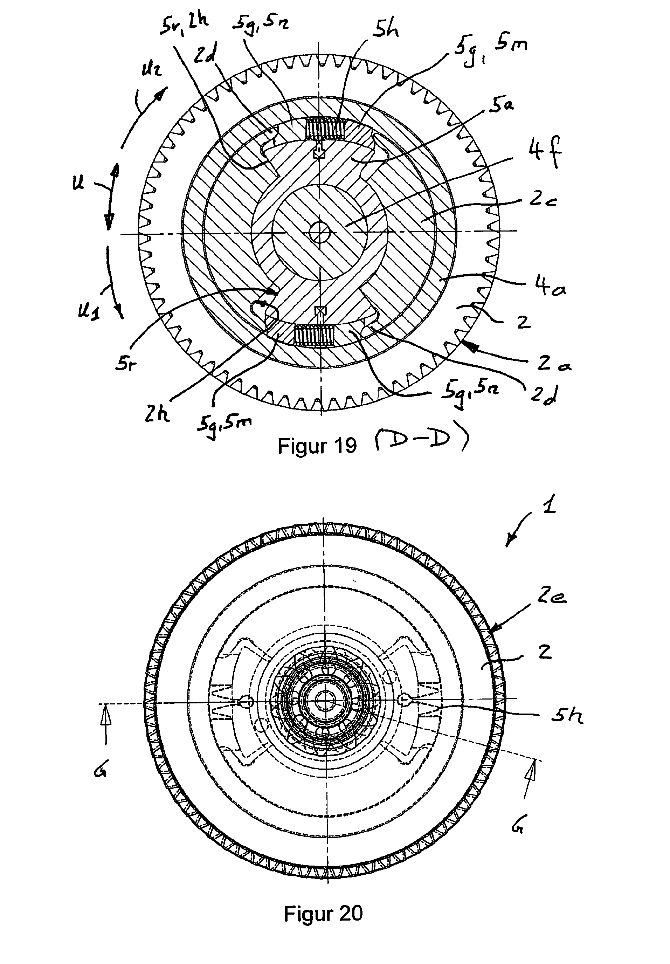

- Fig. 19: einen Schnitt durch das mechanische Getriebe entlang der Schnittlinie D-D;
- Fig. 20 bis 24: ein viertes Ausführungsbeispiel eines mechanischen Getriebes;
- Fig. 20: eine Draufsicht des mechanischen Getriebes;

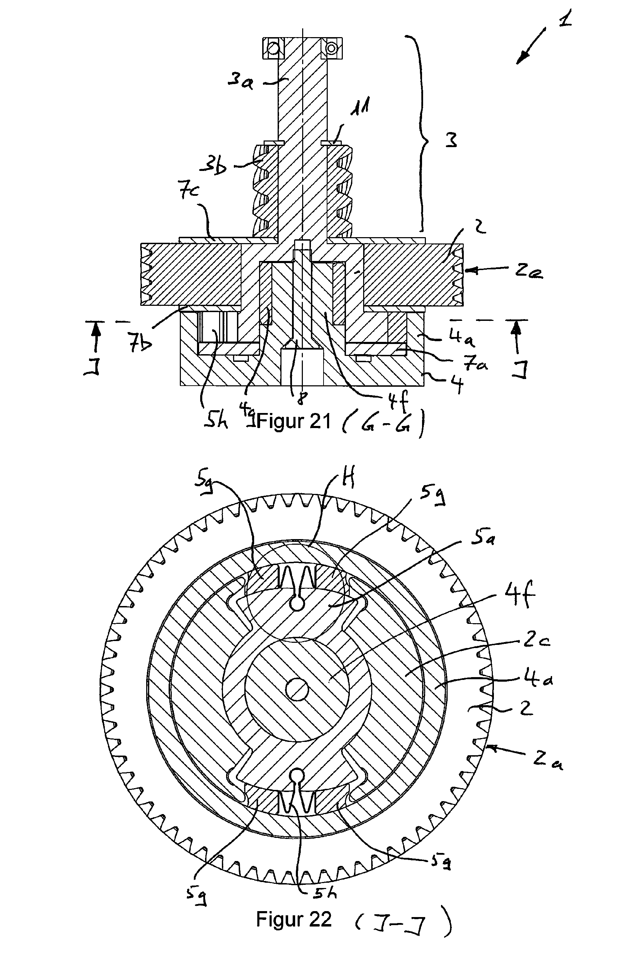

- Fig. 21: einen Längsschnitt durch das mechanische Getriebe entlang der Schnittlinie G-G;
- Fig. 22: einen Schnitt durch das mechanische Getriebe entlang der Schnittlinie J-J;

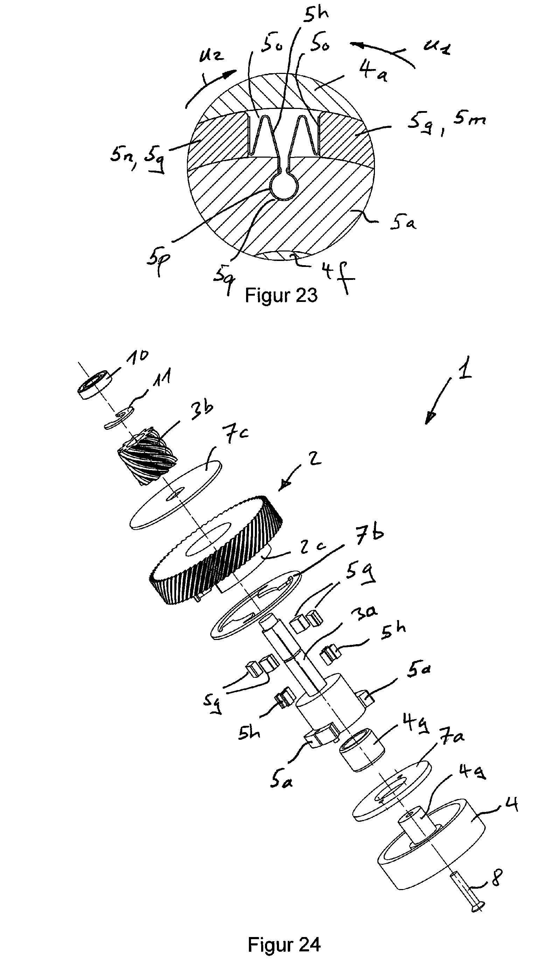

- Fig. 23: eine Detailansicht des Bereichs H;
- Fig. 24: eine Explosionszeichnung des mechanischen Getriebes;

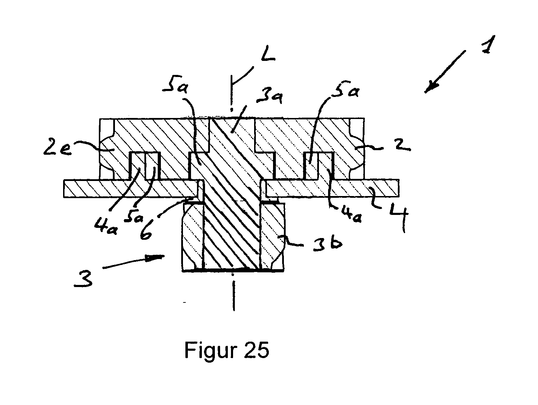

- Fig. 25: ein fünftes Ausführungsbeispiel eines mechanischen Getriebes.

Grundsätzlich sind in den Zeichnungen gleiche Teile mit gleichen Bezugszeichen versehen.

### Wege zur Ausführung der Erfindung

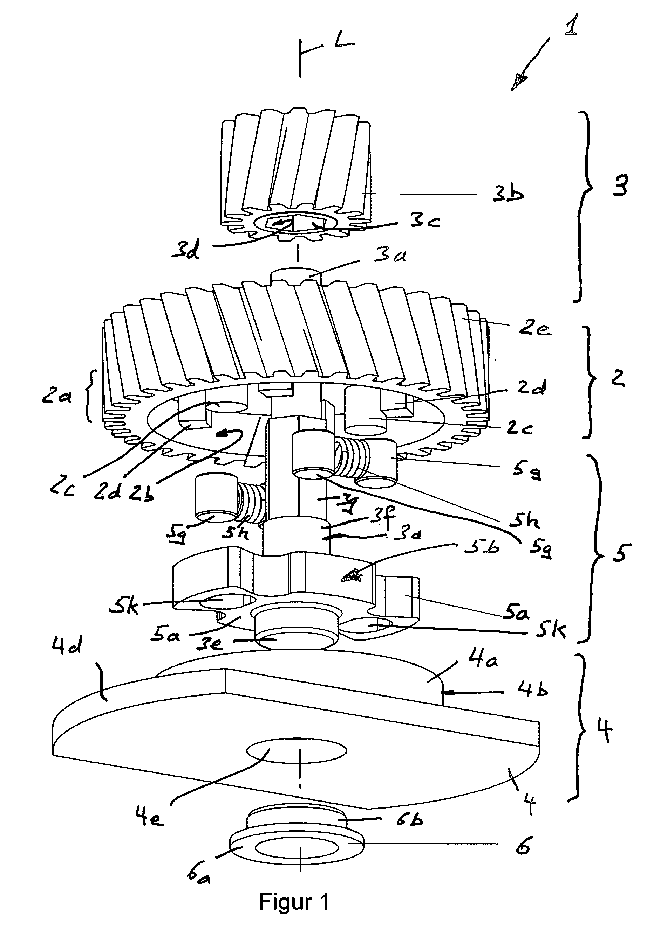

Die Figuren 1 bis 11 zeigen ein erstes Ausführungsbeispiel eines mechanischen Getriebes. Die Explosionszeichnung gemäss Figur 1 zeigt das mechanische Getriebe 1 umfassend ein Eingangsglied 2, ein Ausgangsglied 3, ein Gehäuse 4 sowie eine Lastmomentsperre 5. Das Eingangsglied 2 umfasst ein Ringteil 2a mit einer Aussenverzahnung 2e und einer Ringinnenfläche 2b, und umfasst zwei Mitnehmerstifte 2c und vier Löseteile 2d. Das Ausgangsglied 3 umfasst eine Welle 3a an welcher ein Zahnrad 3b angeordnet ist. Das Zahnrad 3b weist eine formschlüssige Achsöffnung 3c mit einer sechseckigen Innenfläche 3d auf. Die Welle 3a umfasst einen Lagerabschnitt 3f, einen Lagersitz 3e und umfasst zudem einen Befestigungsabschnitt 3g, an welchem das Zahnrad 3b befestigbar ist. Das Gehäuse 4 umfasst eine Gehäusewand 4a mit einer Innenfläche 4c sowie einer Aussenfläche 4b, eine Grundplatte 4d sowie eine Bohrung 4e. Ein Gleitlager 6 mit Flanschteil 6a und hohlzylindrischem Gleitlagerteil 6b ist in der Bohrung 4e angeordnet. Die Lastmomentsperre 5 umfasst einen Bremsläufer 5a mit einer Klemmfläche 5b und mit einem Langloch 5k, und umfasst zwei Paare von Klemmkörpern 5g zwischen denen je eine Feder 5h angeordnet ist. Die Welle 3a ist fest mit dem Bremsläufer 5a verbunden, wobei die Welle 3a und der Bremsläufer 5a vorzugsweise einteilig ausgebildet sind.

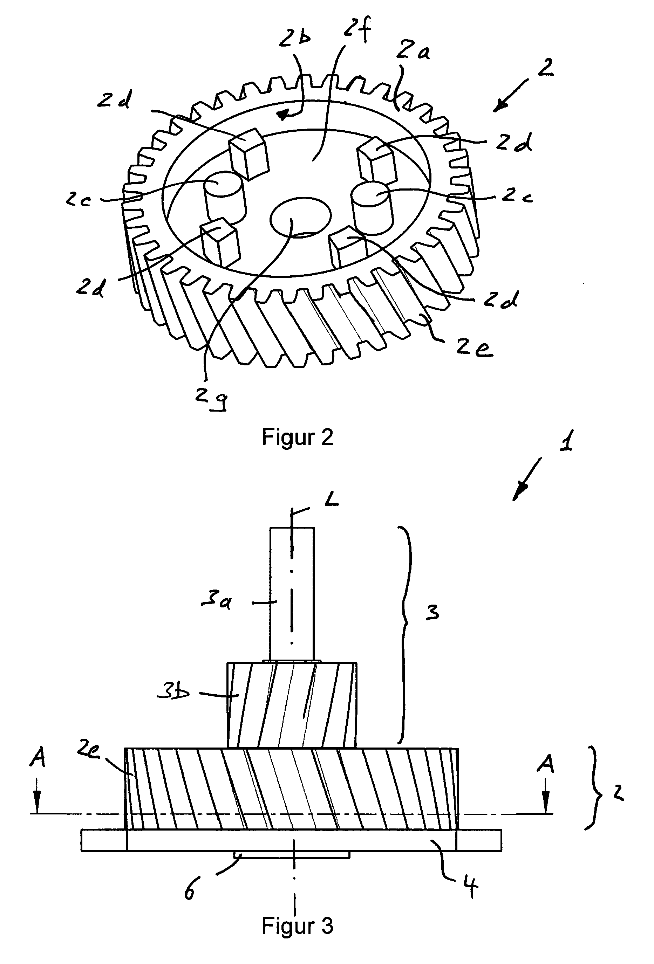

Figur 2 zeigt das bereits beschriebene Eingangsglied 2 nochmals im Detail. Insbesondere ist auch der Innenraum 2f ersichtlich.

Figur 3 zeigt das mechanische Getriebe 1 in einer Seitenansicht. Ausgehend vom Gehäuse 4 sind in Verlaufsrichtung der Drehachse L nacheinander folgend das Eingangsglied 2 und das Ausgangsglied 3 angeordnet. Die Aussenoberfläche des Eingangsglieds 2 und des Ausgangsglieds 3 weisen vorzugsweise eine Zahnradverzahnung auf. Die Aussenoberfläche könnte jedoch auch anders ausgestaltet sein um ein Drehmoment beziehungsweise eine Drehbewegung in das Eingangsglied 2 bzw. das Aufgangsglied ein- bzw. abzuleiten, zum Beispiel eine anders strukturierte Oberfläche oder auch eine glatte Oberfläche. Im dargestellten Ausführungsbeispiel umfasst das Ausgangsglied 3 sowohl ein Zahnrad 3b als auch eine Welle 3a. Der Ausgang kann somit sowohl über das Zahnrad 3b als auch über die Welle 3a abgegriffen werden. Auf die oberhalb des Zahnrades 3b vorstehende Welle 3a könnte auch verzichtet werden. Aus Figur 3 ist zudem die geringe Bauhöhe des mechanischen Getriebes 1 ersichtlich, welche im Wesentlichen durch die Höhe der beiden Zahnräder 2e, 3b bestimmt wird. Im dargestellten Ausführungsbeispiel ist die Lastmomentsperre 5 im Innenraum 2f des Eingangsgliedes 2 angeordnet, sodass die Lastmomentsperre 5 einerseits sehr kompakt ausgestaltet ist und wenige Teilkomponenten umfasst, und andererseits vor Verschmutzung gut geschützt ist, was unter anderem den Vorteil ergibt, dass das erfindungsgemässe mechanische Getriebe 1 zuverlässig und wartungsarm betreibbar ist.

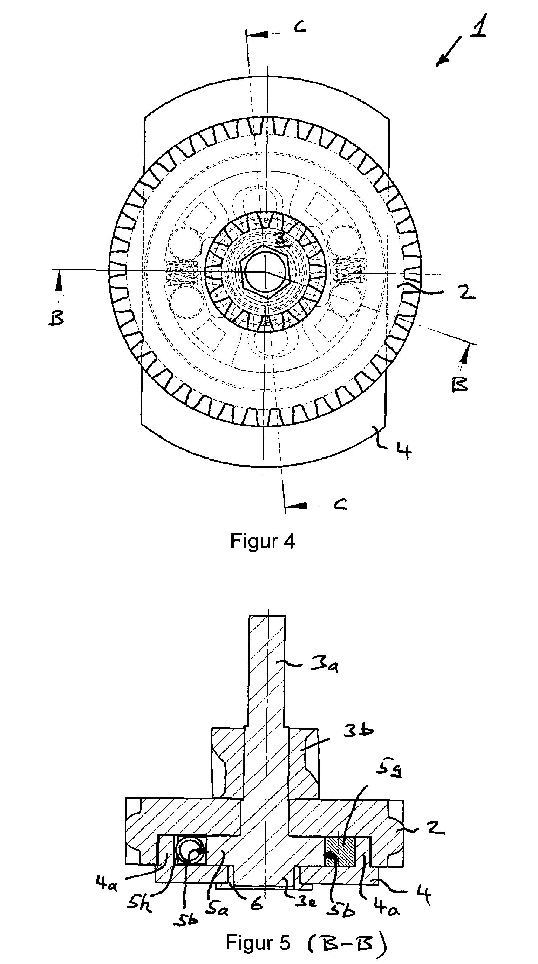

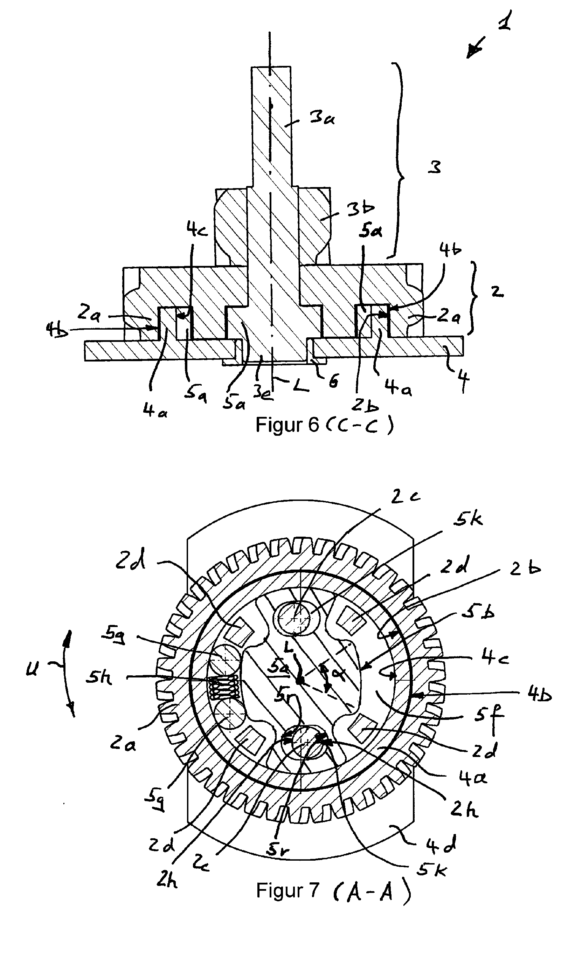

Figur 4 zeigt das in Figur 3 dargestellte mechanische Getriebe 1 von oben, Figur 5 in einem Längsschnitt entlang der Schnittlinie B-B, und Figur 6 in einem Längsschnitt entlang der Schnittlinie C-C.

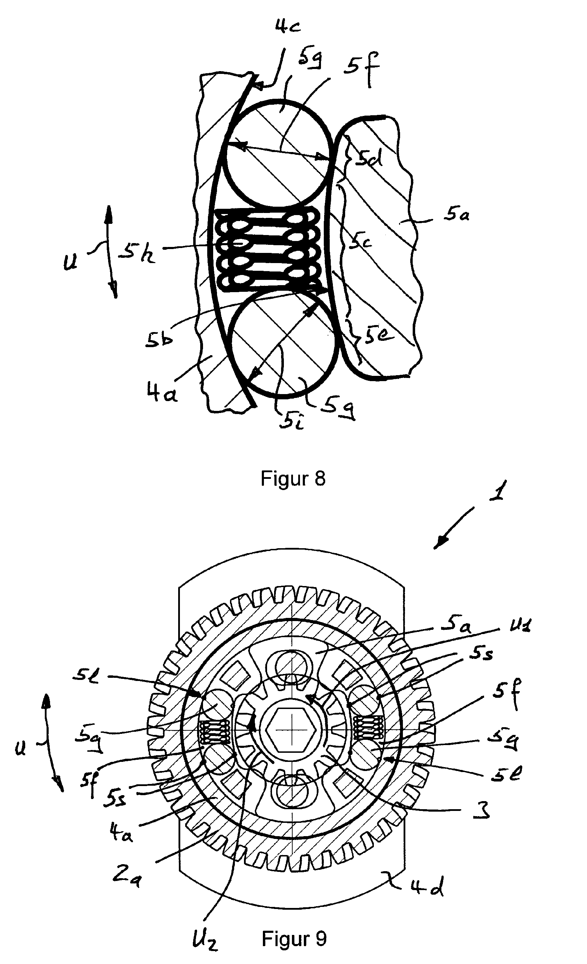

Figur 7 zeigt einen Schnitt durch das mechanische Getriebe 1 entlang der Schnittlinie A-A, wobei in Figur 7 zur besseren Darstellung nur das linke Paar von Klemmkörpern 5g eingesetzt ist und das rechte Paar von Klemmkörpern 5g nicht dargestellt ist. Figur 8 zeigt zudem das linke Paar von Klemmkörpern 5g sowie deren Anordnung im Detail.

Das Gehäuse 4 umfasst die Gehäusewand 4a, welche eine ringförmige, konzentrisch zur Drehachse L verlaufende, und zur Drehachse L hin ausgerichtete Führungsinnenfläche 4c aufweist. Die Lastmomentsperre 5 umfasst den um die Drehachse L drehbaren Bremsläufer 5a, welcher Teil des Ausgangsgliedes 3 bildet. Der Bremsläufer 5a umfasst eine sich entlang eines Winkels α in Umfangsrichtung U erstreckende, bezüglich der Drehachse L nach Aussen gerichtete Klemmfläche 5b, wobei die Klemmfläche 5b, wie in Figur 8 dargestellt, ausgehend von einem Mittenbereich 5c beidseitig in Umfangsrichtung U in einen Endbereich 5d, 5e übergeht. Der Bremsläufer 5a ist derart im Gehäuse 4 angeordnet, dass die Klemmfläche 5b und die Führungsinnenfläche 4c gegenüberliegen und dazwischen einen in Umfangsrichtung U verlaufenden Klemmspalt 5f ausbilden, wobei die Klemmfläche 5b derart ausgestaltet ist, dass sich der Klemmspalt 5f ausgehend vom Mittenbereich 5c beidseitig entlang des Endbereichs 5d,5e verjüngt. Die Klemmkörper 5g sind im Klemmspalt 5f in Umfangsrichtung U gegenseitig beabstandet angeordnet, wobei zwischen dem Paar von Klemmkörpern 5g eine Druckfeder 5h angeordnet ist. Die Klemmkörper 5g weisen radial zur Drehachse L eine radiale Breite 5i auf, welche kleiner ist als die Breite des Klemmspaltes 5f im Mittenbereich 5c, und welche grösser ist als die Breite des Klemmspaltes 5f entlang des Endbereichs 5d, 5e, sodass sich der Klemmkörper 5g im Endbereich 5d, 5e im Klemmspalt 5f zwischen der Führungsinnenfläche 4c und der Klemmfläche 5b verklemmen kann. Der Bremsläufer 5a weist zudem eine sich in Richtung der Drehachse L erstreckende erste Anschlagfläche 5r auf, wobei der Mitnehmerstift 2c eine zweite Anschlagfläche 2h ausbildet, welche in Umfangsrichtung U gegenüberliegend der ersten Anschlagfläche 5r angeordnet ist, sodass bei einem Drehen in Umfangsrichtung U die erste und zweite Anschlagfläche 5r, 2h aneinander anschlagen können, sodass das Eingangsglied 2 den Bremsläufer 5a in beiden Drehrichtungen in Umfangsrichtung U antreiben kann.

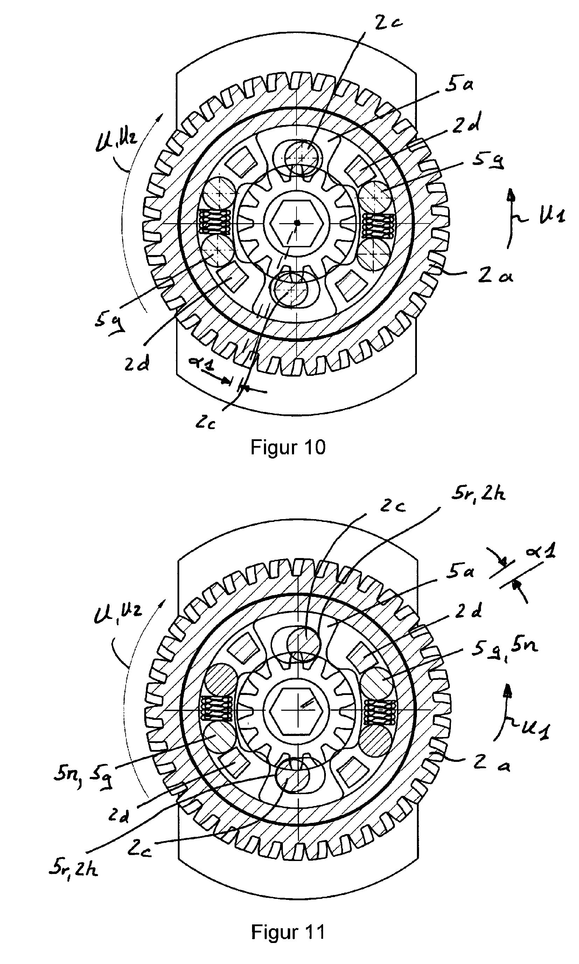

Die Figuren 9 bis 11 zeigten die Funktionsweise des mechanischen Getriebes 1 im Detail. In Figur 9 liegt am Ausgangsglied 3 eine in Umfangsrichtung U 1 wirkende Kraft beziehungsweise ein Drehmoment an. Dies hat zur Folge, dass sich zwei Klemmkörper 5g über Klemmstellen 51 im Klemmspalt 5f zwischen der Klemmfläche 5b und der Führungsinnenfläche 4c verklemmen, sodass das Ausgangsglied 3 bezüglich einer Bewegung in Umfangsrichtung U 1 blockiert ist. Bei einer am Ausgangsglied 3 in der entgegengesetzten Umfangsrichtung U2 wirkenden Kraft würde derselbe Effekt auftreten, indem sich zwei Klemmkörper 5g an den Klemmstellen 5s verklemmen würden. Die Lastmomentsperre 5 hat somit zur Folge, dass das Ausgangsglied 3 bei einem am Ausgangsglied 3 angreifenden Drehmoment blockiert ist und weder in Umfangsrichtung U 1 noch in Umfangsrichtung U2 gedreht werden kann. In Figur 10 wird nun ein Eingangsglied 2 beziehungsweise das Ringteil 2a und die damit verbundenen Mitnehmerstifte 2c und Löseteile 2d in Umfangsrichtung U2 gedreht. Figur 10 zeigt die Situation bei welcher das Löseteil 2d am Klemmkörper 5g anliegt. Die erste Anschlagfläche 5r und die zweite Anschlagfläche 2h sind wie in Figur 10 dargestellt derart in Umfangsrichtung U beabstandet angeordnet, dass, wenn der Klemmkörper 5g im Endbereich 5d,5e im Klemmspalt 5f verklemmt ist, zuerst das Löseteil 2d den Klemmkörper 5g um einen Lösewinkel α1 in Richtung zum Mittenbereich 5c hin bewegen kann, bevor, wie in Figur 11 dargestellt, die erste Anschlagfläche 5r des Bremsläufers 5a auf die zweite Anschlagfläche 2h des Eingangsgliedes 2 einwirkt und diesen in Umfangsrichtung U2 bewegt, um derart zuerst den Klemmkörper 5g aus der Klemmstellung zu drücken, bevor der Bremsläufer 5a und das damit verbunden Ausgangsglied 3 in Umfangsrichtung U2 um die Drehachse L rotiert wird. Das Eingangsglied 2 umfasst insgesamt vier, bezüglich der Drehachse L symmetrisch angeordnete Löseteile 2d. Diese Anordnung hat zur Folge, dass derselbe, vorhin beschriebene Effekt auch bei einer Drehung des Eingangsgliedes 2 in Umfangsrichtung U 1 auftritt, indem zuerst der verklemmte Klemmkörper 5g aus der Klemmstellung gedrückt wird, bevor der Bremsläufer 5a und das damit verbunden Ausgangsglied 3 in Umfangsrichtung U 1 um die Drehachse L rotiert wird. Das erfindungsgemässe mechanische Getriebe 1 weist somit die Eigenschaft auf, dass das Ausgangsglied 3 über das Eingangsglied 2 in beiden Drehrichtungen U1 und U2 antreibbar ist, wogegen ein am Ausgangsglied 3 angreifendes Drehmoment, bei still stehendem mechanischen Getriebe 1 zur Folge hat, dass eine Drehung des Ausgangsgliedes 3 verhindert wird und somit nicht bewegt werden kann.

Aus den Figuren 5 und 6 ist ersichtlich, dass in einer möglichen Ausführungsform das Eingangsglied 2 über dessen Ringteilinnenfläche 2b an der Führungsaussenfläche 4b des Führungsteils 4a anliegt, sodass das Eingangsglied 2 drehbar am Gehäuse 4 gelagert ist. Das Eingangsglied 2 kann jedoch auch einzig an der Welle 3 radial gelagert sein, wobei bei dieser Ausführungsform die Ringteilinnenfläche 2b und die Führungsaussenfläche 4b vorzugsweise gegenseitig beabstandet sind und sich somit nicht berühren.

Figur 12 zeigt einen teilweisen Schnitt durch ein zweites Ausführungsbeispiel eines mechanischen Getriebes 1, das im Unterschied zu dem ersten Ausführungsbeispiel kugelförmige Klemmkörper 5g aufweist, wobei im dargestellten Ausführungsbeispiel die Klemmfläche 5b und die Führungsinnenfläche 4c der Kugel entsprechend angepasst sind und eine sich über 180° erstreckende, gekrümmte Fläche aufweisen.

Die Figuren 13 bis 19 zeigen ein drittes Ausführungsbeispiel eines mechanischen Getriebes 1. Figur 14 zeigt in einer Seitenansicht und Figur 16 in einem Längsschnitt entlang der Drehachse L das Aufgangsglied 3, das Eingangsglied 2 sowie das Gehäuse 4, wobei im Zwischenraum zwischen Gehäuse 4 und Eingangsglied 2 zudem die Lastmomentsperre 5 angeordnet ist. Das Gehäuse 4 umfasst eine konzentrisch zur Drehachse L verlaufende Führungsachse 4f an welcher die Welle 3a drehbar gelagert ist. Im dargestellten Beispiel ist die Welle 3a zudem über ein Verbindungsmittel 8 bezüglich des Gehäuses 4 gesichert. Es kann sich als vorteilhaft erweisen Gleitlager vorzusehen, um den Gleitwiderstand beweglicher Teile zu reduzieren. Figur 16 zeigt ein hülsenförmiges Lagerteil 4g und ein scheibenförmiges Lagerteil 7a, welches beispielsweise aus einem Kunststoff wie PTFE oder Teflon besteht, und dazu dient die Welle 3a reibungsarm bezüglich dem Gehäuse 4 zu lagern. Die Welle 3a und das Eingangsglied 2 sind derart gegenseitig angepasst ausgestaltet, dass das Eingangsglied 2 drehbar an der Welle 3a gelagert ist, wobei vorteilhafterweise zudem ein zweites und ein drittes Lagerteil 7b, 7c vorgesehen sind, um den Gleitwiderstand des Eingangsgliedes 2 zu reduzieren.

Figur 13 zeigt ein Eingangsglied 2 in perspektivischer Ansicht. Das Eingangsglied 2 umfasst zwei sich in Umfangsrichtung U erstreckende Mitnehmer 2c, welche anderen beiden Enden einerseits eine zweite Anschlagfläche 2h und andererseits je ein über die Anschlagfläche 2h vorstehendes Löseteil 2d aufweisen.

Figur 17 zeigt einen Schnitt durch das mechanische Getriebe 1 entlang der Schnittlinie D-D und Figur 18 zeigt den Bereich F im Detail. Die Klemmkörper 5g sind als Gleitkörper ausgestaltet, mit einer zur Klemmfläche 5b hin ausgerichteten ersten Gleitfläche 5x und einer zur Führungsinnenfläche 4c hin ausgerichteten zweiten Gleitfläche 5y. Zwischen den Klemmkörpern 5g ist eine Stossfeder 5h angeordnet, wobei in der Mitte der Klemmfläche 5b zudem eine Federführung 9 umfassend ein Federführungsabschnitt 9a und ein Befestigungsabschnitt 9b angeordnet ist. Der Befestigungsabschnitt 9b ist innerhalb des Bremsläufers 5a angeordnet und hält den Federführungsabschnitt 9a und damit die Feder 5h bezüglich Umfangsrichtung U vorzugsweise in der Mitte der Klemmfläche 5b. In Figur 17 wird das Eingangsglied 2 und damit der Mitnehmer 2c in Umfangsrichtung U2 gedreht, wobei die erste Anschlagfläche 5r und die zweite Anschlagfläche 2h derart in Umfangsrichtung U gegenüberliegend angeordnet ist, sodass bei einem Drehen im Umfangsrichtung U die erste und zweite Anschlagfläche 5r, 2h aneinander anschlagen können, sodass das Eingangsglied 2 den Bremsläufer 5a in Umfangsrichtung U antreiben kann, wobei das Löseteil 2d derart angeordnet ist, dass dieses stellungsabhängig eine in Umfangsrichtung U wirkende Kraft auf den Klemmkörper 5g ausüben kann, wobei die erste Anschlagfläche 5r und die zweite Anschlagfläche 2h derart in Umfangsrichtung U beabstandet angeordnet sind, dass, wenn der Klemmkörper 5g im Endbereich 5d,5e im Klemmspalt 5f verklemmt ist, zuerst das Löseteil 2d den Klemmkörper 5g wie in Figur 17 dargestellt um einen Lösewinkel α1 in Richtung zum Mittenbereich 5c hin bewegt, bevor, wie in Figur 19 dargestellt, die erste Anschlagfläche 5r des Bremsläufers 5a auf die zweite Anschlagfläche 2h des Eingangsgliedes 2 einwirkt und diesen in Umfangsrichtung U bewegt, um derart zuerst den Klemmkörper 5g aus der Klemmstellung zu drücken, bevor der Bremsläufer 5a und das damit verbunden Ausgangsglied 3 in Umfangsrichtung U2 um die Drehachse L rotiert wird.

Vorteilhafterweise ist der Klemmkörper 5g derart ausgestaltet, dass dieser in zur Drehachse L radialen Richtung ausgehend von dem zum Mittenbereich 5c zugewandten Ende eine abnehmende Breite aufweist, und an dem dem Endbereich 5d, 5e zugewandten Ende die geringste Breite aufweist. Ein derartiger Klemmkörper 5g mit einer sich in Umfangsrichtung U1 bzw. U2 verjüngenden Breite weist einerseits ein vorteilhaftes Klemmverhalten und andererseits ein vorteilhaftes Gleitverhalten auf. Der Klemmkörper 5g könnt in einer weiteren Ausführungsform in Umfangsrichtung U1 bzw. U2 jedoch in zur Drehachse L radialen Richtung auch eine konstante Breite aufweisen.

Die Wirkungsweise des Klemmkörperpaars 5g sowie der Feder 5h wird an Hand von Figur 19 im Detail erläutert. Bei einem Drehen des Eingangsgliedes 2 in Drehrichtung U2 wird der Bremsläufer 5a durch den Mitnehmer 2c über die Anschlagflächen 2h, 5r angetrieben und in Drehrichtung U2 gedreht. Das Gehäuse 4 beziehungsweise die Gehäusewand 4a steht still, und die beiden Klemmkörper 5g, die Feder 5h als auch der Mitnehmer 2c und der Bremsläufer 5a drehen in Drehrichtung U2. Dabei wird die Position des links, mit 5n bezeichneten Klemmkörpers 5g durch das Löseteil 2d bestimmt, wobei das Löseteil 2d direkt auf den Klemmkörper 5n einwirkt und diesen in Drehrichtung U2 antreibt. Der recht, mit 5m bezeichnete Klemmkörper 5g wird ausgehend vom Klemmkörper 5n über die Feder 5h in Drehrichtung U2 angetrieben bzw. gestossen. Die Federkraft der Feder 5h ist vorteilhafterweise derart gewählt, dass die Federkraft nicht zu gross ist. Eine zu grosse Federkraft hätte zur Folge, dass der Klemmkörper 5m weit bzw. mit grösserer Kraft nach rechts gedrückt wird, was die Reibung zwischen dem sich in Umfangsrichtung U2 bewegenden Klemmkörper 5m und der Gehäusewand 4b erhöhen würde. Die Federkraft der Feder 5h ist vorteilhafterweise derart gewählt, dass die Federkraft auch nicht zu klein ist. Eine zu kleine Federkraft hätte zur Folge, dass der Klemmkörper 5m nicht weit genug nach rechts gedrückt wird, was bei einem Stillstand des mechanischen Getriebes 1 zur Folge hätte, dass bei einem am Ausgangsglied 3 in Richtung U1 angreifenden Drehmoment der Klemmkörper 5m nicht sofort verkeilen würde. Das Ausgangsglied 3 könnte somit noch um einen geringen Drehwinkel in Richtung U1 gedreht werden, bis der Klemmkörper 5m sich zwischen dem Bremsläufer 5a und der Gehäusewand 4a verklemmt. Bei der Wahl der Grösse der Federkraft der Feder 5h muss somit ein Kompromiss gefunden werden zwischen erzeugter Reibung während dem Drehen und dem Drehwinkel in Drehrichtung U1, welcher zum Blockieren erforderlich ist. In einer besonders vorteilhaften Ausgestaltung ist die Feder 5h derart angeordnet und/oder ausgestaltet, dass deren Federkraft reproduzierbar ist und keinen oder nur geringen betriebsbedingten Schwankungen unterliegt. Es hat sich daher als besonders vorteilhaft erwiesen eine Führungsvorrichtung vorzusehen, welche die Feder 5h in einer vorgegebenen Position hält und somit ein Ausweichen der Federlage verhindert. Die Figuren 17 und 18 zeigen ein Ausführungsbeispiel einer derartigen Federführung 9 mit Führungsabschnitt 9a und Befestigungsabschnitt 9b, um die Feder radial zur Drehachse L in einer definierten Lage zu halten. Es hat sich in einer weiteren vorteilhaften Ausgestaltung als besonders vorteilhaft erwiesen die Feder 5h an sich derart auszugestalten, dass diese kein oder ein nur geringfügiges Ausweichen aufweist. Die Figuren 22 und 23 zeigen ein Ausführungsbeispiel einer derartigen Feder 5h in Kombination mit einer im Bremsläufer 5a eingelassenen Nut 5q. Diese Ausführungsform weist den Vorteil auf, dass die beim Drehen in Umfangsrichtung U2 auf den Klemmkörper 5m bewirkte Kraft nicht durch das Löseteil 2d und den Klemmkörper 5n verursacht werden, sondern im Wesentlichen nur durch die rechte Hälfte der Feder 5h, welche über das Befestigungsteil 5p in der Nut 5q verankert ist. Die in den Figuren 22 und 23 dargestellte Feder 5h mit Befestigung im Bremsläufer 5a weist eine besonders gut reproduzierbare Federkraft auf, mit einer entsprechend geringen Streuung. Die oben stehend bei einem Drehen in Umfangsrichtung U2 erläuterten Kräfte und Effekte treten natürlich bei einem Drehen in Umfangsrichtung U 1 genau gleich auf, jedoch in entgegengesetzter Richtung.

Die Figuren 20 bis 24 zeigen ein viertes Ausführungsbeispiel eines mechanischen Getriebes 1, wobei Figur 20 eine Draufsicht, Figur 21 einen Längsschnitt entlang der Schnittlinie G-G, Figur 22 einen Querschnitt entlang der Schnittlinie J-J, Figur 23 das Detail H und Figur 24 eine Explosionsdarstellung des mechanischen Getriebes 1 zeigt. Im Unterschied zum dritten Ausführungsbeispiel ist die Feder 5h als Blattfeder ausgestaltet, wobei die Blattfeder ein Befestigungsteil 5p und zwei Federarme 5o umfasst. Im Bremsläufer 5a ist eine Nut 5q eingelassen um das Befestigungsteil 5p und somit die gesamte Feder 5h in einer definierten Lage zu halten. Im dritten Ausführungsbeispiel ist die Feder 5h derart ausgestaltet und angeordnet, dass eine Bewegung des einen Klemmkörpers 5g zur Folge hat, dass sich die von der Feder 5h auf den anderen Klemmkörper 5g ausgeübte Kraft unmittelbare verändert. Die im vierten Ausführungsbeispiel dargestellte Feder 5h weist den Vorteil auf, dass, wie beispielsweise aus Figur 23 ersichtlich, ein Verschieben des einen Klemmkörpers 5g in Umfangsrichtung U keine oder eine vorteilhafterweise vernachlässigbar geringe Kraftveränderung der Feder 5h auf den zweiten Klemmkörper 5g zur Folge hat, sodass die Klemmkörper 5g durch die Feder 5h im Wesentlichen unabhängig voneinander gehalten sind.

Figur 24 zeigt nochmals die einzelnen Komponenten des mechanischen Getriebes 1, nämlich das Verbindungsmittel 8, das Gehäuse 4 mit Lagerteil 4g, das erste Lagerteil 7a, das Lagerteil 4g, der Bremsläufer 5a, welcher fest mit der Welle 3a verbunden ist, die Federn 5h sowie die Klemmkörper 5g, das zweite Lagerteil 7b, das Eingangsglied mit Mitnehmer 2c, das dritte Lagerteil 7c, das Zahnrad 3b, einen Sicherheitsring 11 sowie ein Kugellager 10.

Figur 25 zeigt einen Längsschnitt durch ein fünftes Ausführungsbeispiel eines mechanischen Getriebes 1. Die Welle 3a des Ausgangsglieds 3 verläuft durch das Gehäuse 4 hindurch, sodass die Welle 3a auf der dem Eingangsglied 2 gegenüberliegenden Seite des Gehäuses 4 in Verlaufsrichtung der Drehachse L über das Gehäuse 4 vorsteht. Bei einer solchen Ausführungsform ist das Gehäuse 4 zwischen dem Eingangsglied 2 und dem Ausgangsglied 3 beziehungsweise zwischen dem Zahnrad 2e und dem Zahnrad 3b angeordnet.

## Patentansprüche

1. Mechanisches Getriebe (1) mit integrierter Lastmomentsperre, umfassend ein Eingangsglied (2), ein Ausgangsglied (3), ein Gehäuse (4) sowie die Lastmomentsperre (5), wobei das Eingangsglied (2) und das Ausgangsglied (3) um eine gemeinsame Drehachse (L) drehbar gelagert sind, wobei die Drehachse (L) eine Umfangsrichtung (U) definiert,
wobei das Gehäuse (4) eine Gehäusewand (4a) umfasst, welche eine ringförmige, konzentrisch zur Drehachse (L) verlaufende, und zur Drehachse (L) hin ausgerichtete Führungsinnenfläche (4c) aufweist,
wobei die Lastmomentsperre (5) einen um die Drehachse (L) drehbaren Bremsläufer (5a) umfasst, welcher Teil des Ausgangsgliedes (3) bildet, wobei der Bremsläufer (5a) eine sich entlang eines Winkels (α) in Umfangsrichtung (U) erstreckende, bezüglich der Drehachse (L) nach Aussen gerichtete Klemmfläche (5b) umfasst, wobei die Klemmfläche (5b) ausgehend von einem Mittenbereich (5c) beidseitig in Umfangsrichtung (U) in einen Endbereich (5d,5e) übergeht, und wobei der Bremsläufer (5a) derart im Gehäuse (4) angeordnet ist, dass die Klemmfläche (5b) und die Führungsinnenfläche (4c) gegenüberliegen und dazwischen einen in Umfangsrichtung (U) verlaufenden Klemmspalt (5f) ausbilden, wobei die Klemmfläche (5b) derart ausgestaltet ist, dass sich der Klemmspalt (5f) ausgehend vom Mittenbereich (5c) beidseitig entlang des Endbereichs (5d,5e) verjüngt, wobei die Lastmomentsperre (5) zumindest ein Paar von Klemmkörpern (5g) umfasst, welche im Klemmspalt (5f) in Umfangsrichtung (U) beabstandet angeordnet sind, wobei zwischen den zwei Klemmkörpern (5g) eine Feder (5h) angeordnet ist, wobei die Klemmkörper (5g) radial zur Drehachse (L) eine derartige radiale Breite (5i) aufweisen, der Klemmkörper (5g) sich im Endbereich (5d,5e) im Klemmspalt (5f) zwischen der Führungsinnenfläche (4c) und der Klemmfläche (5b) verklemmen kann,
wobei der Bremsläufer (5a) zudem eine sich in Richtung der Drehachse (L) erstreckende erste Anschlagfläche (5r) aufweist, und wobei das Eingangsglied (2) eine zweite Anschlagfläche (2h) umfasst, welche in Umfangsrichtung (U) gegenüberliegend der ersten Anschlagfläche (5r) angeordnet ist, sodass bei einem Drehen im Umfangsrichtung (U) die erste und zweite Anschlagfläche (5r, 2h) aneinander anschlagen können, sodass das Eingangsglied (2) den Bremsläufer (5a) in Umfangsrichtung (U) antreiben kann, und wobei das Eingangsglied (2) ein Löseteil (2d) umfasst, welches derart angeordnet ist, dass dieses stellungsabhängig eine in Umfangsrichtung (U) wirkende Kraft auf den Klemmkörper (5g) ausüben kann, wobei die erste Anschlagfläche (5r) und die zweite Anschlagfläche (2h) derart in Umfangsrichtung (U) beabstandet angeordnet sind, dass, wenn der Klemmkörper (5g) im Endbereich (5d,5e) im Klemmspalt (5f) verklemmt ist, zuerst das Löseteil (2d) den Klemmkörper (5g) um einen Lösewinkel (α1) in Richtung zum Mittenbereich (5c) hin bewegt, bevor die erste Anschlagfläche (5r) des Bremsläufers (5a) auf die zweite Anschlagfläche (2h) des Eingangsgliedes (2) einwirkt und diesen in Umfangsrichtung (U) bewegt, um derart zuerst den Klemmkörper (5g) aus der Klemmstellung zu drücken, bevor der Bremsläufer (5a) und das damit verbunden Ausgangsglied (3) in Umfangsrichtung (U) um die Drehachse (L) rotiert wird.

2. Mechanisches Getriebe nach Anspruch 1, **dadurch gekennzeichnet, dass** das Eingangsglied (2) und/oder das Ausgangsglied (3) ein konzentrisch zur Drehachse (L) angeordnetes Zahnrad (2e,3b) umfassen.

3. Mechanisches Getriebe nach Anspruch 2, **dadurch gekennzeichnet, dass** das Zahnrad (2e) des Eingangsglieds (2) und das Zahnrad (3b) des Ausgangsglieds (3) in Verlaufsrichtung der Drehachse (L) unmittelbar nacheinander folgend angeordnet sind.

4. Mechanisches Getriebe nach einem der vorhergehenden Ansprüche, **dadurch gekennzeichnet, dass** die Lastmomentsperre (5) zwei bezüglich der Drehachse (L) gegenüber liegend angeordnete Klemmflächen (5b) und zwei bezüglich der Drehachse (L) gegenüberliegend angeordnete Paare von Klemmkörpern (5g) umfasst.

5. Mechanisches Getriebe nach einem der vorhergehenden Ansprüche, **dadurch gekennzeichnet, dass** das Gehäuse (4) eine konzentrisch zur Drehachse (L) verlaufende Führungsachse (4f) aufweist, an welcher die Welle (3a) drehbar gelagert ist, und dass das Eingangsglied (2) drehbar an der Welle (3a) gelagert ist.

6. Mechanisches Getriebe nach einem der vorhergehenden Ansprüche, **dadurch gekennzeichnet, dass** die Klemmkörper (5g) als Gleitkörper ausgestaltet sind, mit einer zur Klemmfläche (5b) hin ausgerichteten ersten Gleitfläche (5x) und einer zur Führungsinnenfläche (4c) hin ausgerichteten zweiten Gleitfläche (5y).

7. Mechanisches Getriebe nach einem der Ansprüche 1 bis 5,
**dadurch gekennzeichnet, dass** die Klemmkörper (5g) zylinderförmig ausgestaltet sind.

8. Mechanisches Getriebe nach einem der Ansprüche 1 bis 5,
**dadurch gekennzeichnet, dass** die Klemmkörper (5g) kugelförmige ausgestaltet sind.

9. Mechanisches Getriebe nach Anspruch 8, **dadurch gekennzeichnet, dass** die Führungsinnenfläche (4c) und/oder die Klemmfläche (5b) eine in Umfangsrichtung (U) verlaufende Vertiefung aufweist, welche insbesondere halbkreisförmig ausgestaltet ist.

10. Mechanisches Getriebe nach einem der Ansprüche 6 bis 9, **dadurch gekennzeichnet, dass** im Mittenbereich (5c) eine Federführungsvorrichtung (9) angeordnet ist, an welcher die Feder (5h) geführt ist.

11. Mechanisches Getriebe nach einem der Ansprüche 6 bis 9, **dadurch gekennzeichnet, dass** die Feder (5h) als Blattfeder ausgestaltet ist, dass der Bremsläufer (5a) im Mittenbereich (5c) eine Vertiefung (5q) aufweist, und dass die Blattfeder (5h) ein Befestigungsteil (5p) aufweist, welches in der Vertiefung (5q) angeordnet ist.

12. Mechanisches Getriebe nach Anspruch 11, **dadurch gekennzeichnet, dass** die Blattfeder (5a) symmetrisch ausgestaltet ist, mit einem Befestigungsteil (5p) und zwei Federarmen (5o), dass in Umfangsrichtung (U) mittig im Mittenbereich (5c) das Befestigungsteil (5p) im Bremsläufer (5a) angeordnet ist, und dass die zwei Federarme (5o) im Klemmspalt (5f) verlaufen und das Paar von Klemmkörpern (5g) gegenseitig beabstanden.

13. Mechanisches Getriebe nach einem der vorhergehenden Ansprüche, **dadurch gekennzeichnet, dass** das Eingangsglied (2) und das Ausgangsglied (3) denselben Durchmesser aufweisen, so dass das Übersetzungsverhältnis zwischen Eingangsglied (2) und Ausgangsglied (3) eins beträgt.

14. Mechanisches Getriebe nach einem der vorhergehenden Ansprüche, **dadurch gekennzeichnet, dass** ein Gleitlager (6) konzentrisch zur Drehachse (L) im Gehäuse (4) angeordnet ist, und dass die Welle (3a) an deren Endabschnitt ein Lagersitz (3e) aufweist, welches am Gleitlager (6) anliegt.

15. Linearmotor umfassend ein mechanisches Getriebe (1) nach einem der vorhergehenden Ansprüche, wobei der Linearmotor das Eingangsglied (2) antreibt.
